# EUROPEAN PATENT APPLICATION

(11) **EP 3 656 655 A1**
(43) Date of publication of application: **27.05.2020**
(21) Application number: 18207964.0
(22) Date of filing: 23.11.2018
(51) Int. Cl.: B63H 5/125, B63H 23/32, B63H 25/42

(54) **LEAKAGE DETECTION SYSTEM FOR AZIMUTH THRUSTER**

(71) Applicant: Caterpillar Propulsion Production AB, 47522 Ockaro (SE)
(72) Inventor: Persson, Martin, 42349 Torslanda (SE)
(74) Representative: Kramer Barske Schmidtchen Patentanwälte PartG mbB

(57) **Abstract**

A leakage detection system for an azimuth thruster (100) comprises an azimuth seal (12) defining a plurality of spaces between the same and a sealing surface (20) of a rotatable inner part (16) of the azimuth thruster (100). Via the respective spaces, a flow of compressed air can be supplied to an inner space provided between a propeller shaft seal (24) and a propeller shaft (134) of a lower gear unit (106) of the azimuth thruster (100). In this manner, a leakage of oil and/or water into the inner space (26) of the propeller shaft seal can be sucked from the inner space (26) via the azimuth seal (12) and detected by a detection unit (38).

## Description

### Technical Field

The present disclosure relates to an azimuth thruster. Particularly, the present disclosure relates to a leakage detection system for an azimuth thruster, and an azimuth thruster including the leakage detection system.

### Background

Azimuth thrusters are commonly used as propulsion devices for marine vessels. Azimuth thrusters are at least partly arranged beneath a hull of a marine vessel and typically comprise an upper gear unit, an azimuth unit and a lower gear unit. The upper gear unit is connected to a horizontal drive shaft via an upper gear crown wheel and configured to mechanically drive a vertical input shaft of the azimuth thruster. The azimuth unit is connected to the upper gear unit via a slewing bearing. The azimuth unit has an outer azimuth stem and an inner azimuth stem. The slewing bearing allows a relative rotation between the outer azimuth stem and the inner azimuth stem so that the azimuth thruster can be slewed for maneuvering the vessel. The lower gear unit includes one or more propellers connected to the vertical input shaft for providing thrust to the marine vessel.

An azimuth seal is provided between the outer azimuth stem and the inner azimuth stem, and a propeller shaft seal is provided on a propeller shaft of a propeller in the lower gear unit. The azimuth seal and the propeller shaft seal separate an inside of the azimuth thruster from the surrounding water.

The present disclosure is directed, at least in part, to improving or overcoming one or more aspects of prior systems.

### Summary of the Disclosure

In one aspect, the present disclosure relates to a leakage detection system for an azimuth thruster of a marine vessel. The leakage detection system comprises an azimuth seal configured to be installed between a fixed outer part of the azimuth thruster and a rotatable inner part of the azimuth thruster. The azimuth seal defines a first space between a sealing surface of the rotatable inner part and a seal body of the azimuth seal, and a second space between the sealing surface and the seal body. The seal body includes an inlet fluidly connected to the first space and an outlet fluidly connected to the second space. The leakage detection system further comprises a propeller shaft seal configured to be installed on a propeller shaft mounted on the inner part of the azimuth thruster. The propeller shaft seal defines an inner space between the propeller shaft and the propeller shaft seal. A first passage is configured to fluidly connect the first space to the inner space, and a second passage is configured to fluidly connect the inner space to the second space. A fluid supply system is configured to supply a fluid flow to the inlet of the azimuth seal. The fluid flow passes through the first space, the first passage, the inner space and the second passage and exits via the outlet of the azimuth seal. A detection unit is configured to detect a leakage of oil and/or water into at least one of the first space, the second space and the inner space based on the fluid flow exiting the outlet of the azimuth seal.

In another aspect, an azimuth thruster is disclosed. The azimuth thruster comprises a fixed outer part, a rotatable inner part, and a leakage detection system in accordance with the above aspect. The azimuth seal is installed between the fixed outer part and the rotatable inner part, and the first space, the inner space and the second space are fluidly connected to the fluid supply system.

In another aspect, a method for detecting a leakage of oil and/or water in an azimuth thruster for a marine vessel comprises supplying a fluid flow to an inner space defined between a propeller shaft seal and a propeller shaft of the azimuth thruster via an azimuth seal provided between a fixed outer part of the azimuth thruster and a rotatable inner part of the azimuth thruster. The azimuth seal defines a first space between a sealing surface of the rotatable inner part and a seal body of the azimuth seal, and a second space between the sealing surface and the seal body. The fluid flow is supplied via the first space. The method further comprises returning the fluid flow from the inner space via the second space, and detecting the leakage based on the fluid flow returned via the second space.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic cut view of an exemplary azimuth thruster for a marine vessel (ship, oil rig, etc.) according to the present disclosure;
Fig. 2 shows a schematic sectional view of an azimuth seal installed between an inner part and an outer part of an azimuth thruster;
Fig. 3 shows another schematic sectional view of the azimuth seal.
Fig. 4 shows a schematic sectional view of an azimuth thruster illustrating a fluid flow through the same;
Fig. 5 shows a schematic sectional view illustrating part of a leakage detection system in accordance with the present disclosure; and
Fig. 6 shows a flow diagram of a leakage detection process in accordance with the present disclosure.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that marine vessels including an azimuth thruster may need to fulfil certain environmental regulations. For example, in order to be allowed to operate in US waters, the vessels need to obtain a so-called "Vessel General Permit". This requires that there is no mineral oil to water interface in the azimuth thruster. One solution to avoid such a mineral oil to water interface is to use environmentally acceptable lubricants instead of mineral oil in the azimuth thruster. However, the environmental acceptable lubricants are generally expensive and also associated with technical disadvantages compared to mineral oil. In accordance with the present disclosure, mineral oil to water interfaces are eliminated by a special design of, in particular, the azimuth seal and the propeller shaft seal.

In particular, the present disclosure is based on the realization that, by using a seal with an inner space through which a fluid such as air can flow as the propeller shaft seal provides an air barrier between the side of the propeller shaft seal in contact with the mineral oil inside the azimuth thruster and the side of the propeller shaft seal in contact with the surrounding water.

The present disclosure is also based on the realization that a fluid such as air can be sucked through the inner space of the propeller shaft seal to transport any water or oil that has entered said inner space. The water or oil is collected, for example, in a tank or container, and a frequency of the tank or container being full/emptied is used to determine whether an intolerable amount of water and/or oil ingress has occurred.

Furthermore, the present disclosure is based on the realization that, in order to supply a fluid flow, for example, a flow of compressed air, to the inner space of the propeller shaft seal, the azimuth seal has to be modified in order to allow passage of the fluid flow to and from the propeller shaft seal. In this respect, it has been realized that the azimuth seal should be configured such that at least two spaces are formed between a seal body of the same and a corresponding seal surface of the azimuth thruster. In particular, annular spaces surround the azimuth thruster and can be used to supply the fluid flow to the propeller shaft seal via corresponding inlets and passages provided in the azimuth thruster, and to return the fluid flow from the propeller shaft seal.

In addition, it has been realized that a provision of a further space separating the first and second spaces of the azimuth seal prevents the fluid flow that enters the azimuth seal from directly exiting the same without passing through the inner space of the propeller shaft seal. Therefore, the leakage detection system can be more reliable. In this respect, it has also been realized that it is advantageous that the third space is connected to the inside of the azimuth thruster, with a pressure in the azimuth thruster and the third space being higher than the pressure of the fluid (e.g., compressed air) that enters and exits the azimuth seal via the first and second spaces at all times.

In addition, it has also been realized that the pressure of the fluid supplied to the azimuth seal should be controlled such that it is a comparatively small overpressure with respect to the water pressure outside the azimuth seal. This can minimize a pressure difference over the lips of the seal and minimize wear of the same.

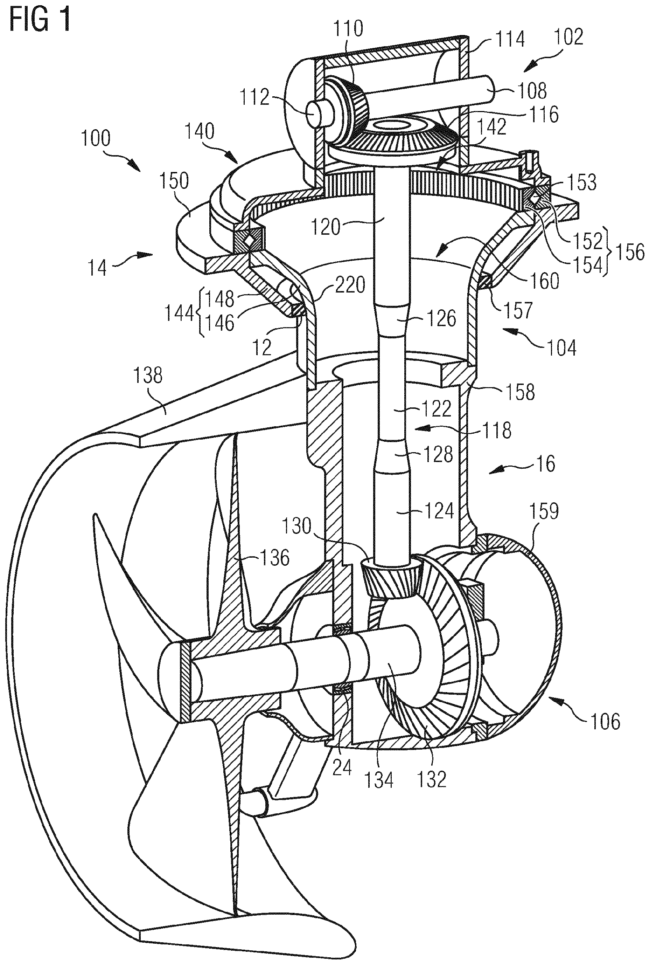

Referring now to the drawings, Fig. 1 shows a schematic drawing of an exemplary azimuth thruster 100 for a marine vessel. The azimuth thruster 100 includes an upper gear unit 102, an azimuth unit 104 and a lower gear unit 106.

The upper gear unit 102 includes a substantially horizontal drive shaft 108 for connecting to a drive source. The drive shaft 108 terminates at an upper gear pinion wheel 110. The upper gear pinion wheel 110 includes an upper gear pinion wheel extension 112 configured to rotatably support the horizontal drive shaft 108 within an upper gear housing 114. The upper gear pinion wheel 110 is configured to transmit power from the horizontal drive shaft 108 to an upper gear crown wheel 116.

The upper gear crown wheel 116 is mounted on top of a substantially vertical drive shaft 118. The vertical drive shaft 118 includes an upper crown wheel shaft 120, an intermediate shaft 122, and a lower pinion shaft 124. The upper crown wheel shaft 120 is drivably connected to the intermediate shaft 122 via a first connection 126. The lower pinion shaft 124 is drivably connected to the intermediate shaft 122 via a second connection 128. The first and second connections 126, 128 may be splined connections, flexible shaft couplings and/or floating shaft couplings.

The vertical input shaft 118 terminates at a lower gear pinion wheel 130 formed on the lower pinion shaft 124. The lower gear pinion wheel 130 extends into the lower gear unit 106 and transmits the power to a lower gear crown wheel 132. The lower gear crown wheel 132 is connected to a propeller shaft 134. The propeller shaft 134 extends substantially horizontally and is provided with a propeller 136 for providing thrust to the azimuth thruster 100. The propeller shaft 134 is mounted on the lower gear unit 106 via a propeller shaft seal 24. The propeller 136 may be any type of propeller 136 known to a person skilled in the art, for example a variable or fixed pitch propeller.

The propeller 136 is surrounded by a nozzle 138. The nozzle 138 is fixedly connected to the lower gear unit 106 and may be any type of nozzle known to a person skilled in the art. The nozzle 138 is configured to increase a thrust of the propeller 136 and to protect the propeller 136 against, for example, debris. In some embodiments, the azimuth thruster 100 may not include the nozzle 138.

For maneuvering the marine vessel, the lower gear unit 106 including the propeller 136 and the nozzle 138 need to be rotated (slewed) around the vertical input shaft 118. This means that the upper gear unit 102 needs to be stationary, e.g. non-rotatable, whereas the lower gear unit 106 needs to be rotatable. To rotate the lower gear unit 106 relative to the upper gear unit 102 and thus about the vertical input shaft 118, the azimuth thruster 100 includes the azimuth unit 104.

The azimuth unit 104 is connected to the upper gear unit 102 via a separation plate 140. The separation plate 140 includes an opening 142 configured to at least partially accommodate the upper crown wheel shaft 120. Thus, the separation plate 140 at least partially separates the azimuth unit 104 from the upper gear unit 102. An upper crown wheel shaft housing (not shown in Fig. 1) may be connected to the separation plate 140 and may protrude through the opening 142 for rotatably supporting the upper crown wheel shaft 120 via suitable bearings.

The azimuth unit 104 further includes an azimuth stem 144 with an inner azimuth stem 146 and an outer azimuth stem 148. The outer azimuth stem 148 is connected to the separation plate 140 via a ring body 152. The ring body 152 is fixedly connected to an annular flange 150 of the outer azimuth stem 148. The annular flange 150 is fixedly connected to a hull structure (foundation) of the marine vessel. Thus, the outer azimuth stem 148 including the separation plate 140 and the upper gear unit 102 are stationary, e.g. non-rotatable, with respect to the marine vessel, and are an example of a fixed outer part 14 of the azimuth thruster 100 disclosed herein.

A ring-shaped gearwheel 154 is rotatable relative to the outer ring body 152 via a bearing 153. The ring-shaped gearwheel 154 is fixedly connected to the inner azimuth stem 146. The outer ring body 152 and the ring-shaped gearwheel 154 together form a slewing bearing 156. Specifically, the outer ring body 152 forms an outer race of the slewing bearing 156, and the ring-shaped gearwheel 154 forms an inner race of the slewing bearing 156. The slewing bearing 156 is configured to allow a rotation of the inner azimuth stem 146 (and the lower gear unit 106) relative to the outer azimuth stem 148 (relative rotation between the ring-shaped gearwheel 154 and the outer ring body 152). In particular, the inner azimuth stem 146 is an example of a rotatable inner part 16 of the azimuth thruster 100 in accordance with the present disclosure.

The ring-shaped gearwheel 154 includes teeth on an inner circumferential face. A slewing drive including at least one drive gearwheel (both not shown) is arranged to rotate the ring-shaped gearwheel 154. Specifically, teeth on an outer circumferential face of the at least one drive gearwheel engage with the teeth on the inner circumferential face of the ring-shaped gearwheel 154. Thus, the slewing drive rotates the at least one drive gearwheel, which in turn rotates the ring-shaped gearwheel 154 relative to the outer ring body 152.

The inner azimuth stem 146 is connected at its lower part to a vertical shaft housing 158. The vertical shaft housing 158 surrounds the vertical input shaft 118 and connects the inner azimuth stem 146 with the lower gear unit 106. The vertical shaft housing 158 is fixedly connected to a lower gear housing 159. The lower gear housing 159 surrounds the lower gear transmission of the lower gear unit 106.

As the outer azimuth stem 148 is non-rotatably connected to the hull structure of the marine vessel, and as the inner azimuth stem 146 is rotatably connected to the outer azimuth stem 148 via the slewing bearing 156, the lower gear unit 106 is rotatable relative to the upper gear unit 102 via the slewing bearing 156.

Inside the azimuth unit 104, a lubricant compartment 160 is disposed to accommodate lubricant for bath lubricating the slewing bearing 156. Lubricant may be any type of lubricant known to a person skilled in the art. For example, the lubricant may be mineral oil.

The lubricant compartment 160 is formed by an annular space surrounding the vertical input shaft 118. The lubricant compartment 160 is filled with lubricant such that the slewing bearing 156 is immersed in lubricant for arranging a full bath lubrication of the slewing bearing 156. For keeping the lubricant within the azimuth stem 144, an azimuth seal 12 is arranged between a lower end of the outer azimuth stem 148 (the fixed outer part 14 of the azimuth thruster 100) and the inner azimuth stem 146 (the rotatable inner part 16 of the azimuth thruster). Typically, the lubricant compartment 160 accommodates a volume of lubricant in a range between about 0.5 m³ and about 3 m³, depending on the type and size of the azimuth thruster 100 and the inner azimuth stem 146.

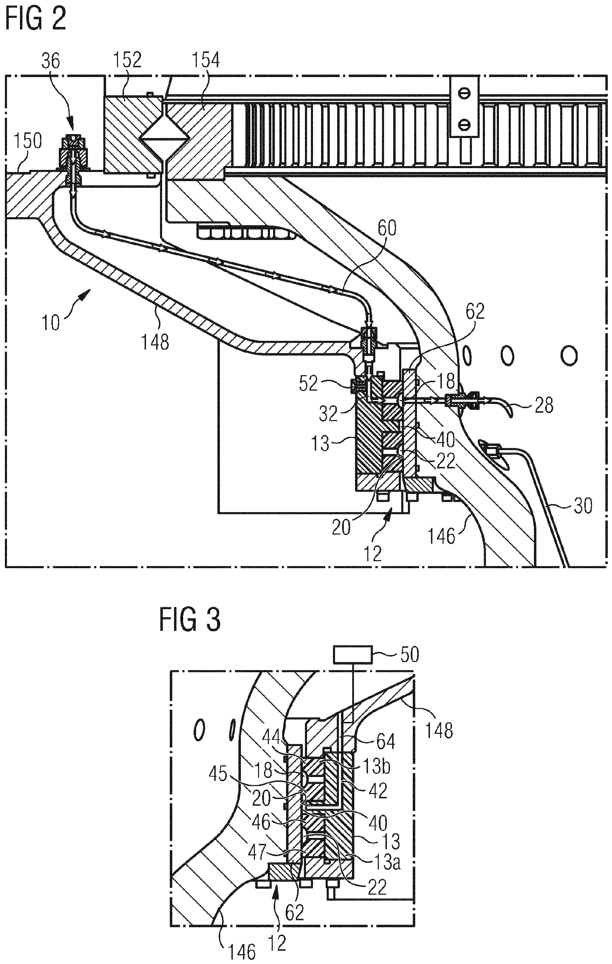

An exemplary leakage detection system for the azimuth thruster 100 will be described in the following with reference to Figs. 2 to 5.

Fig. 2 shows a schematic sectional view of a part of a leakage detection system 10 for the azimuth thruster 100. The leakage detection system 10 includes the azimuth seal 12, which is installed between the fixed outer part 14 of the azimuth thruster 100 and the rotatable inner part 16 of the same. In the exemplary embodiment, the azimuth seal 12 is formed as a substantially annular seal having a seal body 13 and a plurality of sealing lips 44, 45, 46 and 47 for sealing against a sealing surface 20 of the inner azimuth stem 146, in particular, a cylindrical liner 62 mounted to the same (see Fig. 3). The sealing lips 44, 45, 46 and 47 may be formed integrally with the seal body 13, or may be mounted to the same in a known manner. In the exemplary embodiment, the seal body 13 includes a two-part body, including an outer part 13a and an inner part 13b on which the sealing lips 44 to 47 are provided. In the exemplary embodiment, the azimuth seal 12 includes four sealing lips 44, 45, 46 and 47. The azimuth seal 12 is secured to the outer azimuth stem 148 in an appropriate manner and seals against the sealing surface 20. Accordingly, the inner azimuth stem 146 is rotatable with respect to the outer azimuth stem 148, with the azimuth seal 12 provided between the same to prevent the lubricant (for example, mineral oil) from leaking from the inside of the azimuth thruster 100 to the surrounding water. Likewise, the azimuth seal 12 prevents water from entering the inside of the azimuth thruster 100.

As shown in more detail in Fig. 3, the azimuth seal 12, i.e., the sealing lips 44 to 47 of the same, define three spaces between the seal body 13 and the sealing surface 20. In particular, the sealing lips 44 and 45 define a first space 18, and the sealing lips 46 and 47 define a second space 22. A third space 40 is defined between the seal body 13 and the sealing surface 20 and is disposed between the first space 18 and the second space 22. It will be appreciated that each of the first to third spaces is a substantially annular space that surrounds the inner azimuth stem 146.

As shown in Fig. 2, the seal body 13 of the azimuth seal 12 includes an inlet 32 fluidly connected to the first space 18. In the exemplary embodiment, the inlet 32 is formed as a passage that extends radially from the first space 18 into the seal body 13, and then extends in the vertical direction to the upper side of the seal body 13. At the upper side of the seal body 13, the inlet 32 is fluidly connected to a supply line 60 configured to supply a flow of fluid, as will be described in more detail below.

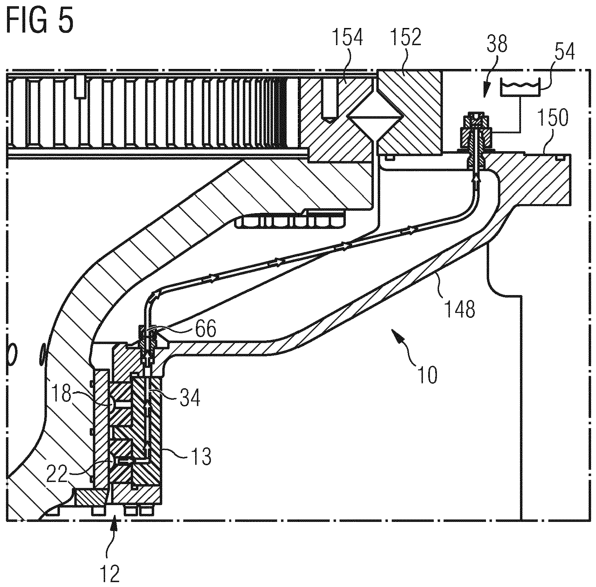

Further, as shown in Fig. 5, the seal body 13 of the azimuth seal 12 also includes an outlet 34 fluidly connected to the second space 22. In particular, the outlet 34 also includes a passage formed in the seal body 13 and extending in the radial direction from the second space 22, and then in the vertical direction to the upper side of the seal body 13. As will be described in more detail below, the outlet 34 is fluidly connected to a discharge line 66 provided in the outer azimuth stem 148.

As shown in Fig. 3, the seal body 13 also includes a connection passage 42 fluidly connected to the third space 40 and, as schematically shown, fluidly connected to an inside of the azimuth thruster 100 via a passage 64. In this manner, the pressure inside the third space 40 can be the same as the pressure inside the azimuth thruster 100. A pressure regulator 50 is provided to regulate the pressure inside the azimuth thruster 100, for example, by regulating a pressure of a supply of compressed air to the inside of azimuth thruster 100. In the exemplary embodiment, a plurality of connection passages 42 are provided in the seal body 13. For example, the plurality of connection passages may be evenly distributed in a circumferential direction of the azimuth seal 12. As shown in Fig. 3, each connection passage 42 extends radially from the third space 40, and then extends upwards to the upper side of the seal body 13 in the vertical direction to be connected to the passage 64.

As shown in Fig. 2, the leakage detection system 10 includes a fluid supply system 36 configured to supply a fluid flow to the inlet 32 of the azimuth seal 12. For example, the fluid supply system 36 may be a ventilation system (for example, a Lagersmit Ventus system) that supplies compressed air, which may come from an air supply of the vessel, to different systems, for example, to the azimuth seal 12 and to the inside of the azimuth thruster 100. In the exemplary embodiment, the inside of the azimuth thruster 100 is pressurized such that the pressure inside the same (and also inside the third space 40) is higher than the pressure in the first space 18 and the second space 22 at all times.

As also shown in Fig. 2, the leakage detection system 10 further comprises a first passage 28 provided inside the inner azimuth stem 146 and configured to fluidly connect the first space 18 to an inner space 26 of the propeller shaft seal 24, which will be described below. Likewise, a second passage 30 is configured to fluidly connect the inner space 26 to the second space 22.

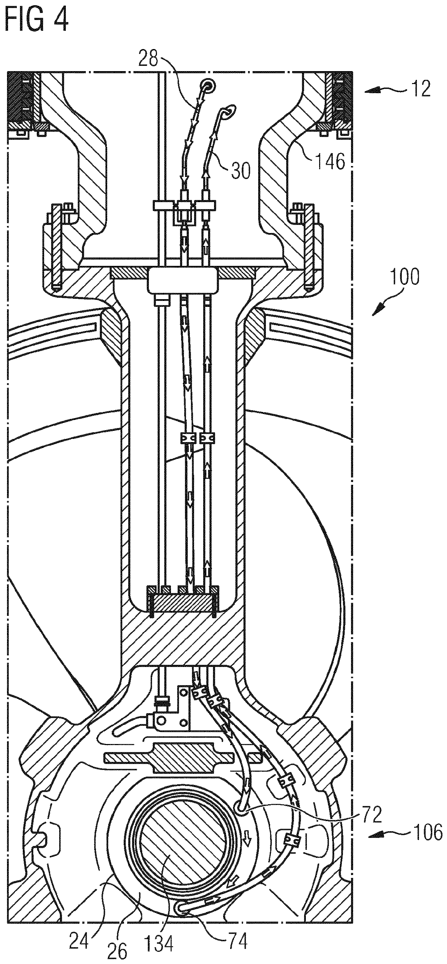

Fig. 4 shows an exemplary configuration for fluidly connecting the first passage 28 and second passage 30 to the propeller shaft seal 24. As shown in Fig. 4, the propeller shaft seal 24 defines the inner space 26 between the propeller shaft 134 and the propeller shaft seal 24. For example, the inner space 26 may be formed by providing a pair of sealing lips (not shown) similar to the sealing lips of the azimuth seal 12. As shown in Fig. 4, the inner space 26 surrounds the propeller shaft 134. The flow of compressed air from the first passage 28 enters the inner space 26 via an inlet 72 provided in a front surface of the propeller shaft seal 24, passes through the inner space 26, and exits the inner space 26 via an outlet 74 connected to the second passage 30. In some embodiments, the propeller shaft seal may include a further sealing lip that is provided rearward of the pair of sealing lips defining the inner space 26 to define a further space in the propeller shaft seal 24 that may serve as a barrier.

As described above, the fluid flow, for example, the flow of compressed air, supplied to the inlet 32 of the azimuth seal 12 passes through the first space 18, the first passage 28, the inner space 26 and the second passage 30 and exits via the outlet 34 of the azimuth seal 12. As shown in Fig. 2, the leakage detection system 100 includes an air release valve 52 fluidly connected to the first space 18. The air release valve 52 is configured to limit a pressure of the air supplied to the first space 18 by the fluid supply system 36 to a predetermined slight overpressure with respect to the water pressure outside of the azimuth seal 12. For example, the overpressure may be between 0.01 bar and 0.1 bar, preferably around 0.05 bar. An exemplary water pressure at the position of the azimuth seal 12 may be, for example, 0.15 bar. As will be described in more detail below, the fluid supply system 36 is configured to supply the fluid flow, in particular, the flow of compressed air, at a variable flow rate of between 1 l/min and 100 1/min, preferably around 5 l/min during normal operation and around 40 1/min during a detection operation.

As shown in Fig. 5, the leakage detection system 100 further comprises a detection unit 38 configured to detect a leakage of oil and/or water into at least one of the first space 18, the second space 22 and the inner space 26 based on the fluid flow exiting the outlet 34 of the azimuth seal 12. To this end, as shown in Fig. 5, the detection unit 38 is configured to detect the leakage based on an amount of oil and/or water that is transported by the fluid flow exiting the outlet 34. In particular, during a detection operation, the fluid flow is provided such that a vacuum is created and any leakage of oil and/or water in the respective spaces follows the fluid flow and is sucked from said spaces. As shown in Fig. 5, the oil and/or water that is transported, i.e. sucked out, by the fluid flow exiting the outlet 34 is collected in a container 54. The container 54 has a predetermined volume, for example, around 0.2 1. Further, the container may be transparent, such that the contents of the same can be visually inspected from the outside to determine whether it is oil or water that is leaking into the respective spaces.

In the exemplary embodiment, the container is emptied when a predetermined level is reached. As will be described in more detail below, the detection unit 38 is configured to detect that the leakage has occurred when a predetermined frequency of emptying the container 54 is exceeded.

It should be noted that, in other embodiments, the detection unit 38 may also be configured to detect a leakage based at least in part on a pressure of the fluid flow exiting the outlet 34. This is because, if a leakage occurs, a pressure drop will occur when the leakage is sucked out of the respective spaces. Such a pressure drop may be detected by an appropriate pressure sensor (not shown), which may be in communication with the detection unit 38. Here, it is understood by the skilled person that the detection unit 38 may be configured as any appropriate control unit or microcomputer configured to process corresponding inputs and produce corresponding outputs that may be used to generate a warning, for example, for an operator to indicate that a leakage has occurred. As such control units are well-known, a detailed description will be omitted.

### Industrial Applicability

The leakage detection system as disclosed herein is applicable for integration in an azimuth thruster for providing thrust to a marine vessel. The leakage detection system described above allows for a reliable detection of any leakage of oil and/or water into the respective spaces defined by the azimuth seal 12 and the propeller shaft seal 24. In particular, any leakage that has entered the inner space 26 of the propeller shaft seal 24 can be detected by supplying a fluid flow, for example, compressed air, to the inner space 26 via the azimuth seal 12, and sucking out the supplied fluid flow, for example, by an injector (not shown) of the fluid supply system 36, thereby transporting any leakage to the container 54 via the outlet 34 of the azimuth seal 12. This allows for a reliable detection of any leakage occurring, for example, at the propeller shaft seal 24.

An exemplary method for detecting such a leakage will be described in the following. Generally, such a method includes supplying a fluid flow to the inner space 26 defined between the propeller shaft seal 24 and the propeller shaft 134 via the azimuth seal 12 in the above-described manner, returning the fluid flow from the inner space 26 of the propeller shaft seal 24 via the second space 22 of the azimuth seal 12, and detecting the leakage based on the fluid flow returned via the second space 22.

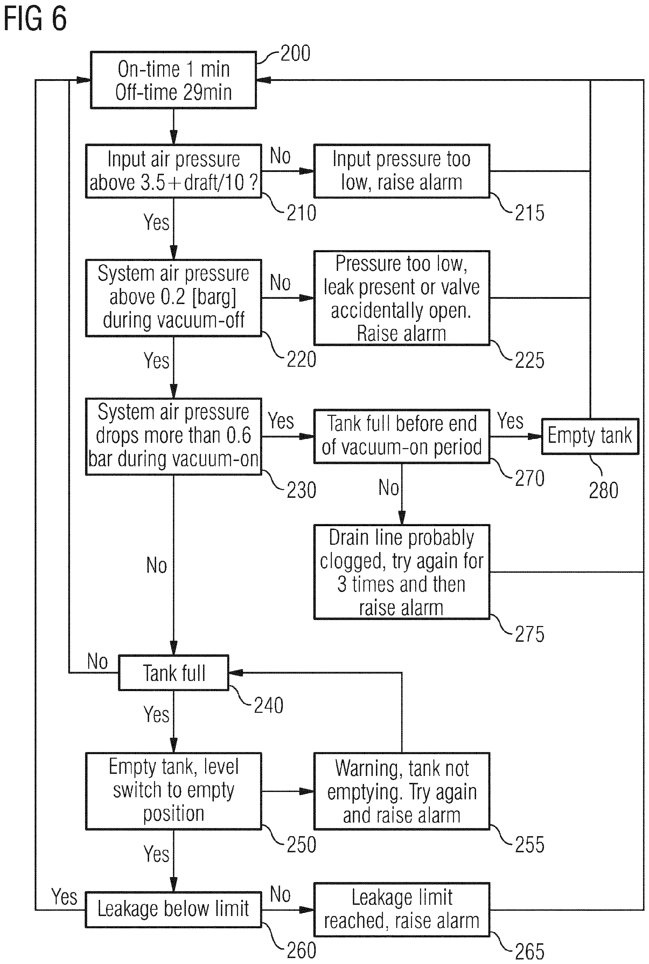

Fig. 6 shows an exemplary flow diagram of a leakage detection process in accordance with the present disclosure.

As shown in Fig. 6, the leakage detection is performed with a predetermined control cycle. In other words, during a first part of the cycle, the fluid supply system is operating normally in order to supply the fluid flow at the slight overpressure of, for example, 0.05 bar. The flow rate may be, for example, 5 l/min. This serves to control the pressure difference over the sealing lips of the azimuth seal 12. The supplied air is released via the air release valve 52. As will be appreciated by the skilled person, in case of a ventilation system that includes an injector, the low air volume during normal operation will not create a vacuum due to the slow speed of the same over the injector.

For a predetermined second duration of the cycle, the air flow into the system is increased to, for example, 40 1/min, and this is going to activate the injector to create a vacuum. Any leakage of oil and water into the spaces 18, 22 and 26 will follow the air and will be collected in the container 54.

In the exemplary embodiment, the cycle is a thirty minute cycle, and the ON time of the leakage detection system during which the potential leakage is sucked out from the respective spaces, is, for example, one minute.

The process starts at step 200, and first a check is performed in step 210 whether the input air pressure is above a certain value, which may depend on the draft around the azimuth thruster. In case it is found that the input pressure is too small, a corresponding alarm is raised in step 215.

If the input air pressure is appropriate, in step 220, it is checked whether the system air pressure is above 0.2 bar while no vacuum is created. If this is not the case, a warning that the pressure is too low, i.e. a leak may be present or a valve may accidentally be opened, is raised in step 225.

If it is found in step 220 that the system air pressure is above 0.2 bar, it is determined whether the system air pressure drops more than 0.6 bar during a generation of the vacuum by the injector. If so, it is confirmed in step 270 whether the container is full before the generation of the vacuum has ended. If so, the container is emptied in step 280 and the process then returns to step 200. In case it is determined in step 270 that the container is not full, the processing returns to step 200, but after a predetermined number of determinations that the container is not full in step 270, an appropriate warning is generated, as this may indicate that the discharge line 66 may be clogged.

If it is determined in step 230 that the system air pressure does not drop more than 0.6 bar, it is determined in step 240 whether the container is full. If this is not the case, the processing returns to step 200. On the other hand, if it is determined in step 240 that the container is full, the container is emptied in step 250 and, for example, a level switch is switched to an empty position. Here, as an additional security measure, it may be detected whether the level switch has been set to the empty position. If not, a corresponding warning that the container 54 may not be empty is generated in step 255.

After the container 54 has been successfully emptied, it is determined in step 260 whether a frequency of emptying the tank is below a predetermined limit. If this is not the case, a corresponding alarm is raised in step 265. Otherwise, the processing returns to step 200. In this manner, when the frequency of emptying the container 54 is above the predetermined limit, it can be determined that there is a leakage of water and/or oil into one of the spaces 18, 22 and 26. An operator can determine from a visual inspection of the container 54 whether the leakage consists of water or oil and initiate appropriate countermeasures. In most cases, there will be an amount of water ingress caused by wear of the respective seals that is not tolerable. Accordingly, the leakage detection system 100 of the present disclosure can protect the lower gear unit 106 against water ingress. In case an oil loss from the lower gear unit 106 occurs, the leakage detection system 100 of the present disclosure prevents any leakage of oil into the marine environment.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1 % or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

## Claims

1. A leakage detection system (10) for an azimuth thruster (100) of a marine vessel, comprising:
an azimuth seal (12) configured to be installed between a fixed outer part (14) of the azimuth thruster (100) and a rotatable inner part (16) of the azimuth thruster (100), the azimuth seal defining a first space (18) between a sealing surface (20) of the rotatable inner part (16) and a seal body (13) of the azimuth seal (12), and a second space (22) between the sealing surface (20) and the seal body (13), the seal body (13) including an inlet (32) fluidly connected to the first space (18) and an outlet (34) fluidly connected to the second space (22);
a propeller shaft seal (24) configured to be installed on a propeller shaft (134) mounted on the inner part (16) of the azimuth thruster (100), the propeller shaft seal defining an inner space (26) between the propeller shaft (134) and the propeller shaft seal (24);
a first passage (28) configured to fluidly connect the first space (18) to the inner space (26);
a second passage (30) configured to fluidly connect the inner space (26) to the second space (22);
a fluid supply system (36) configured to supply a fluid flow to the inlet (32) of the azimuth seal (12), the fluid flow passing through the first space (18), the first passage (28), the inner space (26) and the second passage (30) and exiting via the outlet (34) of the azimuth seal (12); and
a detection unit (38) configured to detect a leakage of oil and/or water into at least one of the first space (18), the second space (22) and the inner space (26) based on the fluid flow exiting the outlet (34) of the azimuth seal (12).

2. The leakage detection system of claim 1, wherein the azimuth seal (12) defines a third space (40) between the sealing surface (20) and the seal body (13), the third space being disposed between the first space (18) and the second space (22).

3. The leakage detection system of claim 2, wherein the seal body (13) includes a connection passage (42) fluidly connected to the third space (40) and configured to be fluidly connected to an inside of the azimuth thruster (100).

4. The leakage detection system of claim 3, wherein a plurality of connection passages (42) are provided in the seal body (13), the plurality of connection passages being evenly distributed in a circumferential direction of the azimuth seal (12).

5. The leakage detection system of any one of claims 1 to 4, wherein the azimuth seal (12) includes a first pair of sealing lips (44, 45) protruding from the seal body (13) and configured to define the first space (18), and a second pair of sealing lips (46, 47) protruding from the seal body (13) and configured to define the second space (22).

6. The leakage detection system of any one of claims 1 to 5, wherein the fluid supply system (36) is configured to supply a flow of pressurized air as the fluid flow to the inlet (32).

7. The leakage detection system of claim 6, further comprising an air release valve (52) fluidly connected to the first space (18) and configured to limit a pressure of the air supplied to the first space (18) to a predetermined overpressure with respect to a water pressure on the outside of the azimuth seal (12).

8. The leakage detection system of claim 7, wherein the overpressure is between 0.01 bar and 0.1 bar, preferably around 0.05 bar.

9. The leakage detection system of any one of claims 6 to 8, wherein the fluid supply system (36) is configured to supply the flow of compressed air at a variable flow rate of between 1 l/min and 100 l/min, preferably between 5 l/min during normal operation and between 40 l/min during a detection operation.

10. The leakage detection system of any one of claims 6 to 9, wherein the fluid supply system (36) is configured to pressurize an inside of the azimuth thruster (100) with air at a pressure that is higher than a pressure in the first space (18) and the second space (22).

11. The leakage detection system of any one of claims 1 to 10, wherein the detection unit (38) is configured to detect the leakage based at least in part on a pressure of the fluid flow exiting the outlet (34).

12. The leakage detection system of any one of claims 1 to 11, wherein the detection unit (38) is configured to detect the leakage based on an amount of oil and/or water that is transported by the fluid flow exiting the outlet (34).

13. The leakage detection system of claim 12, further comprising a container (54) configured to receive the oil and/or water that is transported by the fluid flow exiting the outlet (34), the container being emptied when a predetermined level is reached,
wherein the detection unit (38) is configured to detect that the leakage has occurred when a predetermined frequency of emptying the container (54) is exceeded.

14. An azimuth thruster (100) for a marine vessel, comprising
a fixed outer part (14);
a rotatable inner part (16); and
a leakage detection system (10) according to any one of claims 1 to 13, wherein the azimuth seal (12) is installed between the fixed outer part (14) and the rotatable inner part (16), and the first space (18), the inner space (26) and the second space (22) are fluidly connected to the fluid supply system (36).

15. A method for detecting a leakage of oil and/or water in an azimuth thruster (100) for a marine vessel, comprising:
supplying a fluid flow to an inner space (26) defined between a propeller shaft seal (24) and a propeller shaft (134) of the azimuth thruster (100) via an azimuth seal (12) provided between a fixed outer part (14) of the azimuth thruster (100) and a rotatable inner part (16) of the azimuth thruster (100), the azimuth seal defining a first space (18) between a sealing surface (20) of the rotatable inner part (16) and a seal body (13) of the azimuth seal (12), and a second space (22) between the sealing surface (20) and the seal body (13), the fluid flow being supplied via the first space (18);
returning the fluid flow from the inner space (26) via the second space (22); and
detecting the leakage based on the fluid flow returned via the second space (22).
